(19) **Europäisches Patentamt**

**European Patent Office**

**Office européen des brevets**

(11) **EP 0 793 803 B1**

(12) **EUROPÄISCHE PATENTSCHRIFT**

(45) Veröffentlichungstag und Bekanntmachung des Hinweises auf die Patenterteilung:
**02.01.2003 Patentblatt 2003/01**

(51) Int Cl.$^7$: **G01M 15/00**

(21) Anmeldenummer: **96937168.1**

(86) Internationale Anmeldenummer:
**PCT/DE96/01609**

(22) Anmeldetag: **30.08.1996**

(87) Internationale Veröffentlichungsnummer:
**WO 97/011345 (27.03.1997 Gazette 1997/14)**

(54) **VERFAHREN ZUR VERBRENNUNGSAUSSETZERERKENNUNG DURCH AUSWERTUNG VON DREHZAHLSCHWANKUNGEN**

PROCESS FOR DETECTING MISFIRING BY ASSESSING ROTATION SPEED VARIATIONS

PROCEDE DE DETECTION DE RATES DE COMBUSTION PAR EVALUATION DES VARIATIONS DE VITESSE

(84) Benannte Vertragsstaaten:
**DE FR GB IT**

(30) Priorität: **21.09.1995 DE 19534996**

(43) Veröffentlichungstag der Anmeldung:
**10.09.1997 Patentblatt 1997/37**

(73) Patentinhaber:
• **ROBERT BOSCH GMBH**
**70442 Stuttgart (DE)**
Benannte Vertragsstaaten:
**DE FR GB IT**
• **AUDI AKTIENGESELLSCHAFT**
**85045 Ingolstadt (DE)**
Benannte Vertragsstaaten:
**DE**

(72) Erfinder:
• **VOLKART, Asmus**
**D-74321 Bietigheim-Bissingen (DE)**
• **RIES-MÜLLER, Klaus**
**D-74906 Bad Rappenau (DE)**
• **HAFNER, Sigrid**
**D-70193 Stuttgart (DE)**
• **FÖRSTER, Jürgen**
**D-09123 Chemnitz (DE)**
• **WIMMER, Wolfgang**
**D-74235 Erlenbach (DE)**
• **LOHMANN, Andrea**
**D-70195 Stuttgart (DE)**

(56) Entgegenhaltungen:
EP-A- 0 709 664          FR-A- 2 512 952
US-A- 5 387 253

• **RESEARCH DISCLOSURE, Nr. 324, April 1991, HAVANT GB, Seite 253 XP000170367 "ENGINE MISFIRE DETECTION"**
• **PATENT ABSTRACTS OF JAPAN vol. 17, no. 479 (M-1471), 31.August 1993 & JP 05 113149 A (MATSUSHITA ELECTRIC IND CO LTD), 7.Mai 1993,**

## Beschreibung

Stand der Technik

Die Erfindung betrifft ein Verfahren zur Erkennung von Verbrennungsaussetzern bei Verbrennungsmotoren.

Verbrennungsaussetzer führen zu einem Anstieg der im Betrieb des Verbrennungsmotors emittierten Schadstoffe und können darüberhinaus zu einer Schädigung eines Katalysators im Abgastrakt des Motors führen. Zur Erfüllung gesetzgeberischer Forderungen zur On-Board-Überwachung abgasrelevanter Funktionen ist eine Erkennung von Verbrennungsaussetzern im gesamten Drehzahl- und Lastbereich notwendig. In diesem Zusammenhang ist es bekannt, daß beim Betrieb mit Verbrennungsaussetzern charakteristische Änderungen des Drehzahlverlaufs des Verbrennungsmotors gegenüber dem Normalbetrieb ohne Aussetzer auftreten. Durch den Vergleich dieser Drehzahlverläufe kann zwischen Normalbetrieb ohne Aussetzer und Betrieb mit Aussetzern unterschieden werden.

Ein auf dieser Basis arbeitendes Verfahren ist bereits aus der DE-OS 41 38 765 bekannt.

Nach diesem bekannten Verfahren wird jedem Zylinder ein als Segment bezeichneter Kurbelwellenwinkelbereich zugeordnet. Realisiert werden die Segmente bspw. durch Markierungen auf einem mit der Kurbelwelle gekoppelten Geberrad. Die Segmentzeit, in der die Kurbelwelle diesen Winkelbereich überstreicht, hängt unter anderem von der im Verbrennungstakt umgesetzten Energie ab. Aussetzer führen zu einem Anstieg der zündungssynchron erfaßten Segmentzeiten. Nach dem bekannten Verfahren wird aus Differenzen von Segmentzeiten ein Maß für die Laufunruhe des Motors berechnet, wobei zusätzlich langsame dynamische Vorgänge, zum Beispiel der Anstieg der Motordrehzahl bei einer Fahrzeugbeschleunigung, rechnerisch kompensiert werden. Ein auf diese Weise für jede Zündung berechneter Laufunruhewert wird ebenfalls zündungssynchron mit einem vorbestimmten Schwellwert verglichen. Ein Überschreiten dieses gegebenenfalls von Betriebsparametern wie Last und Drehzahl abhängigen Schwellwerts wird als Aussetzer gewertet.

Die Sicherheit, mit der Aussetzer nach diesem Verfahren erkannt werden können, sinkt naturgemäß um so weiter ab, je weniger sich einzelne Aussetzer auf die Drehzahl der Kurbelwelle auswirken. Die Zuverlässigkeit der Aussetzererkennung sinkt daher mit steigender Zahl der Zylinder der Brennkraftmaschine und mit zunehmender Drehzahl sowie abnehmender Last ab.

Aus der US-A 5,387,253 und in der EP-A 709 664 sind gattungsgemäße Verfahren bekannt geworden, die eine digitale Filterung der "Spektralemissionen" einer Brennkraftmaschine beschreiben. Mittels digitaler Filter wird die spektrale Verteilung der Kurbelwellenbeschleunigungsenergie, d.h. die Verteilung der Anteile der genannten Energie über der Kurbelwellendrehfrequenz ausgewertet. Reguläre Zündvorgänge weisen Energieanteile in anderen Frequenzbereichen auf als die Aussetzer. Aus dem Auftreten von Frequenzanteilen in bestimmten Frequenzbereichen kann demnach auf das Auftreten von Aussetzern geschlossen werden.

Aus dem Fachbeitrag "Engine Misfire Detection", Research Disclosure No. 324, April 1991, Havant GB, page 253 xp000170367 ist ein Verfahren zum Erkennen von Verbrennungsaussetzern bei Brennkraftmaschinen bekannt geworden, das auf der Ermittlung der Autokorrelationsfunktion von drehzahlabhängigen Signalen beruht. Ein signifikantes Ergebnis kann dann erwartet werden, wenn die Aussetzer periodisch, d.h. bei ein und demselben Zylinder, auftreten. In diesem Spezialfall zeigt die Autokorrelationsfunktion ein entsprechendes Ergebnis eines Aussetzers an.

Vor diesem Hintergrund besteht die Aufgabe der Erfindung darin, ein Verfahren anzugeben, das die Sicherheit der Aussetzererkennung bei

Brennkraftmaschinen mit hoher Zylinderzahl auch bei hohen Drehzahlen und geringen Lasten weiter verbessert.

Diese Aufgabe wird durch die Merkmale der Ansprüche 1 oder 2 gelöst. Vorteilhafte Weiterbildungen und Ausgestaltungen sind Gegenstand der abhängigen Ansprüche.

Die Erfindung basiert auf der Erkenntnis, dass sich der Segmentzeitanstieg infolge eines Aussetzers bei höheren Drehzahlen nicht mehr auf eine, sondern auf mehrere Segmentzeiten verteilt. Gebildet wird ein Maß für die Laufunruhe durch digitale Filterung der Segmentzeiten, wobei das digitale Filter vorbestimmte Filterkoeffizienten aufweist. Die Filterung wird hierbei über einen Winkelbereich von bis zu vier Nockenwellenumdrehungen der Brennkraftmaschine erfasst. Das digitale Filter, das als digitales Filter mit begrenzter Impulsantwort realisiert ist, erfolgt derart, dass ein Maß $q$ jeweils individuell für einen Zündtakt $n$ gebildet wird, so dass jedem Zündtakt $n$ ein Maß $q(n)$ zugeordnet ist, mit dem ein Aussetzen der Verbrennung im Zündtakt $n$ detektierbar ist:

EP 0 793 803 B1

$$q(n) \sim \frac{\sum_{m=Ma}^{Me} b(m-Ma) \cdot ts(n-m) = b(n)*ts(n)}{t_s(n)^3}$$

mit b(n) als Filterkoeffizienten,

Ma, Me als Filteranfang und -ende,

M=MA-Me+1 als Filterlänge und $*$ als Faltungsoperator

ts(n) = Segmentzeit.

Das Maß für die Laufunruhe ist hierbei noch ohne Dynamikkorrektur gebildet, die ggf. vorteilhafterweise einfach ergänzt werden kann. Die Multiplikation mit dem Kehrwert der Segmentzeiten ts(n)$^3$ als Proportionalitätsfaktor dient der Eliminierung der Drehzahlabhängigkeit.

Anstelle der Segmentzeiten können auch den Segmenten zugeordnete Geschwindigkeiten $\omega$ verwendet werden. Der unabhängige Anspruch 2 ist demnach anstelle auf Segmentzeiten auf die den Segmenten zugeordneten Geschwindigkeiten abgestellt :

$$q(n) \sim b(n)*\omega(n) \text{ oder } \omega(n)(b(n)*\omega(n))$$

mit

$$b(n)*\omega(n) = \sum_{m=Ma}^{Me} b(m-Ma) \cdot \omega(n-m)$$

Es ist ein wesentliches Merkmal der Erfindung, daß die Verfahren zur Aussetzererkennung um Verfahren zur Dynamikkompensation ergänzt werden können. Das Ziel besteht darin, den Einfluß von aussetzerähnlichen Drehzahländerungen zu eliminieren.

Ausführungsbeispiele der Erfindung werden in der folgenden Beschreibung mit Bezug auf die Zeichnungen beschrieben.

Im einzelnen zeigt Figur 1 das technische Umfeld der Erfindung. Fig. 2 stellt einen zur Durchführung des erfindungsgemäßen Verfahrens geeigneten Rechner dar. Figur 3 verdeutlicht das bekannte Prinzip der Bildung von Segmentzeiten als Basis eines Maßes für die Laufunruhe auf der Basis von Drehzahlmessungen. Fig. 4 zeigt eine Funktionsblockdarstellung eines Digitalfilters mit begrenzter Impulsantwort als Ausführungsbeispiel der Erfindung und Fig. 5 veranschaulicht die Wirkung der Erfindung anhand von Signalverläufen über der Zeit.

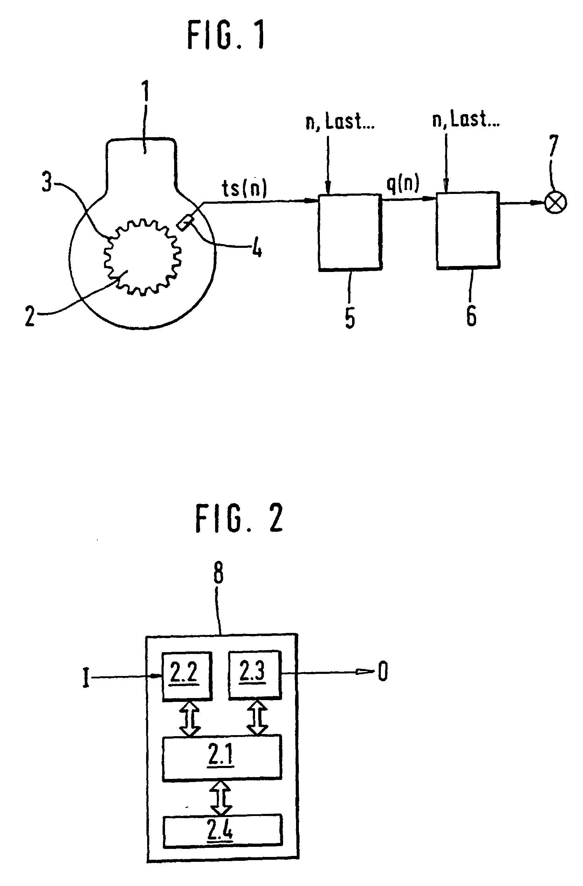

Figur 1 zeigt eine Brennkraftmaschine 1 mit einem Winkelgeberrad 2, das Markierungen 3 trägt, einem Winkelsensor 4, einem Block 5, der der Signalverarbeitung und Merkmalsextraktion dient, sowie einem Block 6, der der Erkennung von Verbrennungsaussetzern durch Auswertung der Merkmalssignale auf der Basis von Schwellwertvergleichen, neuronalen Netzen, unscharfen Klassifikatoren oder auch anderen bekannten Mitteln und/oder Verfahren dient. Den Blöcken 5 und 6 werden ggf. Betriebsparameter der Brennkraftmaschine wie Last und Drehzahl zugeführt. Werden Verbrennungsaussetzer festgestellt, kann bspw. eine mit 7 bezeichnete Warnlampe eingeschaltet werden.

Der Kern der Erfindung betrifft den Block 5, d.h. die Signalverarbeitung und Merkmalsextraktion bzw. die Gewinnung des Signals q(n) in Fig. 1. Die Funktionsblöcke 5 und 6 werden bevorzugt durch Programmierung eines Rechners 8 realisiert, dessen Grundfunktion in Fig. 2 dargestellt ist. Danach vermittelt eine Recheneinheit 2.1 zwischen einem Eingabeblock 2.2 und einem Ausgabeblock 2.3 unter Verwendung von in einem Speicher 2.4 abgelegten Programmen und Daten.

Die Drehbewegung des mit der Kurbelwelle der Brennkraftmaschine gekoppelten Winkelgeberrades wird mit Hilfe des als Induktivsensor realisierten Winkelsensors 4 in ein elektrisches Signal umgewandelt, dessen Periodizität ein Abbild des periodischen Vorbeistreichens der Markierungen 3 am Winkelsensor 4 darstellt. Die Zeitdauer zwischen einem Anstieg und einem Abfall des Signalpegels entspricht daher der Zeit, in der sich die Kurbelwelle über einen dem Ausmaß einer Markierung entsprechenden Winkelbereich weitergedreht hat.

Diese Zeitdauern werden in dem als Rechner realisierten Steuergerät 8 zu einem Maß q(n) für die Laufunruhe der Brennkraftmaschine weiterverarbeitet.

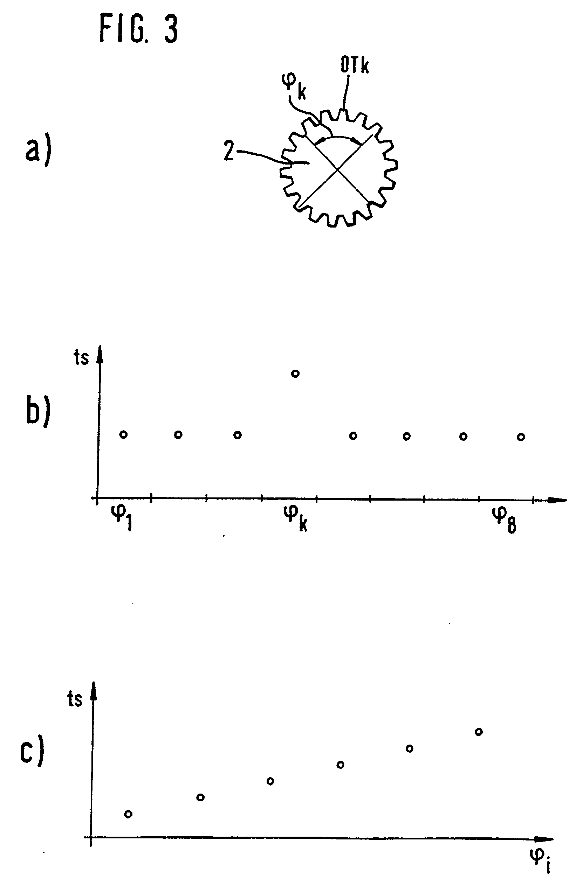

Die Figur 3a zeigt eine Einteilung des Winkelgeberrades in vier Segmente, wobei jedes Segment eine vorbestimmte Zahl von Markierungen aufweist. Die Markierung OTk ist demjenigen oberen Totpunkt der Kolbenbewegung des k-ten Zylinders eines in diesem Beispiel achtzylindrigen Verbrennungsmotors zugeordnet, der im Verbrennungstakt dieses Zylinders liegt. Um diesen Punkt herum ist ein Drehwinkelbereich $\varphi k$ definiert, der sich in diesem Beispiel über ein Viertel der Markierungen des Winkelgeberrades erstreckt. Analog sind den Verbrennungstakten der übrigen Zylinder Winkelbereiche $\varphi 1$ bis $\varphi 8$ zugeordnet, wobei hier vom Viertaktprinzip ausgegangen wird, bei dem sich die Kurbelwelle für einen vollständigen Arbeitszyklus zweimal dreht. Daher entspricht beispielsweise der Bereich $\varphi 1$ des ersten Zylinders dem Bereich $\varphi 5$ des fünften Zylinders usw. Die zu einer Kurbelwellenumdrehung zugehörigen Winkelbereiche können voneinander getrennt sein, sich aneinander anschließen oder auch überlappen. Im ersten Fall gibt es Markierungen, die keinem Winkelbereich zugeordnet sind, im zweiten Fall gehört jede Markierung zu genau einem Winkelbereich und im dritten Fall können jeweils dieselben Markierungen verschiedenen Winkelbereichen zugeordnet sein. Beliebige Längen und Lagen der Winkelbereiche sind somit möglich.

In der Figur 3b sind die Zeiten ts aufgetragen, in denen die Winkelbereiche durch die Drehbewegung der Kurbelwelle überstrichen werden. Dabei ist ein Aussetzer im Zylinder k angenommen. Der mit dem Aussetzer verbundene Drehmomentausfall führt zu einem Anstieg der zugehörigen Zeitspanne ts. Die Zeitspannen ts stellen damit bereits ein Maß für die Laufunruhe dar, das prinzipiell zur Erkennung von Aussetzern geeignet ist. Durch eine geeignete Verarbeitung der Zeitspannen ts, insbesondere durch die Bildung von Differenzen

$$ts(n+1)-ts(n)$$

benachbarter Zeitspannen und Normieren dieser Differenzen auf die dritte Potenz der Zeitspanne ts(i) zu einem Zündtakt mit Index i erhält der Laufunruhewert die Dimension einer Beschleunigung und weist, wie sich empirisch gezeigt hat, ein verbessertes Signal/Rausch-Verhältnis auf.

Figur 3c verdeutlicht den Einfluß von Drehzahländerungen auf die Erfassung der Zeitdauern ts. Dargestellt ist der Fall einer Drehzahlabnahme, wie sie typischerweise im Schiebebetrieb eines Kraftfahrzeuges auftritt. Zur Kompensation dieses Effektes, der sich in einer verhältnismäßig gleichförmigen Verlängerung der erfaßten Zeiten ts äußert, ist es beispielsweise bekannt, einen additiven Korrekturterm D zur Dynamikkompensation zu bilden und so bei der Berechnung des Laufunruhewertes zu berücksichtigen, daß der Verlängerungseffekt kompensiert wird.

Alle nachfolgenden Beispiele beziehen sich auf einen 12-Zylinder-Motor, können aber auf Verbrennungsmotoren mit anderer Zylinderzahl umgestellt werden. Ein bekannter Merkmalswert für einen 12-Zylindermotor berechnet sich unter Hinzunahme einer Eliminierung der Drehzahlabhängigkeit durch Division mit $ts(n)^3$ und Dynamikkompensation zu

$$Lut(n)= \frac{ts(n-5)/12-ts(n)+ts(n+1)-ts(n+7)/12}{ts(n)^3}$$

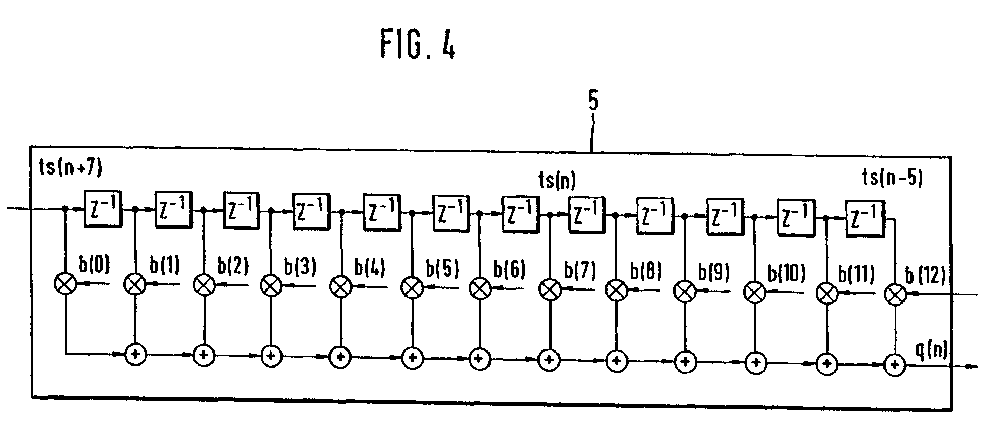

Ein Ausführungsbeispiel der Erfindung wird durch das in Fig. 4 dargestellte Digitalfilter realisiert.

In der oberen Reihe der Fig. 4 sind 12 Speicherzellen dargestellt, in die zeitdiskret aufeinanderfolgende Werte von Segmentzeiten ts eingeschrieben werden. Bei jeder von links erfolgenden Eingabe einer Segmentzeit ts werden die Inhalte der rechten Speicherzellen durch den Inhalt ihrer linksseitig benachbarten Speicherzellen überschrieben. Nach dem zeitdiskreten Erneuern der Speicherinhalte wird der Inhalt jeder Speicherzelle 1 bis 12 in der mittleren Reihe der Fig. 4 multiplikativ mit einem Filterkoeffizient b1 bis b12 verknüpft, wobei jeweils ein Filterkoeffizient mit Index i einer Speicherzelle mit Index i zugeordnet ist. Die Ergebnisse dieser Verknüpfungen werden in der unteren Reihe zu dem Laufunruhemerkmalswert q(n) aufsummiert. Mit anderen Worten: Jede Segmentzeit wird gewissermaßen durch die Anordnung von links nach rechts durchgeschoben und zeitdiskret mit verschiedenen Filterkoeffizienten gewichtet. Die dargestellte Filterung entspricht einem Digitalfilter mit begrenzter Impulsantwort.

Der Zahl 12 als Anzahl der Speicherzellen liegt die Annahme eines 12-Zylindermotors und einer Filterung über eine Nockenwellenumdrehung zugrunde. Sinnvoll erscheint eine Filterung über einen Bereich von bis zu auch ca zwei Nockenwellenumdrehungen.

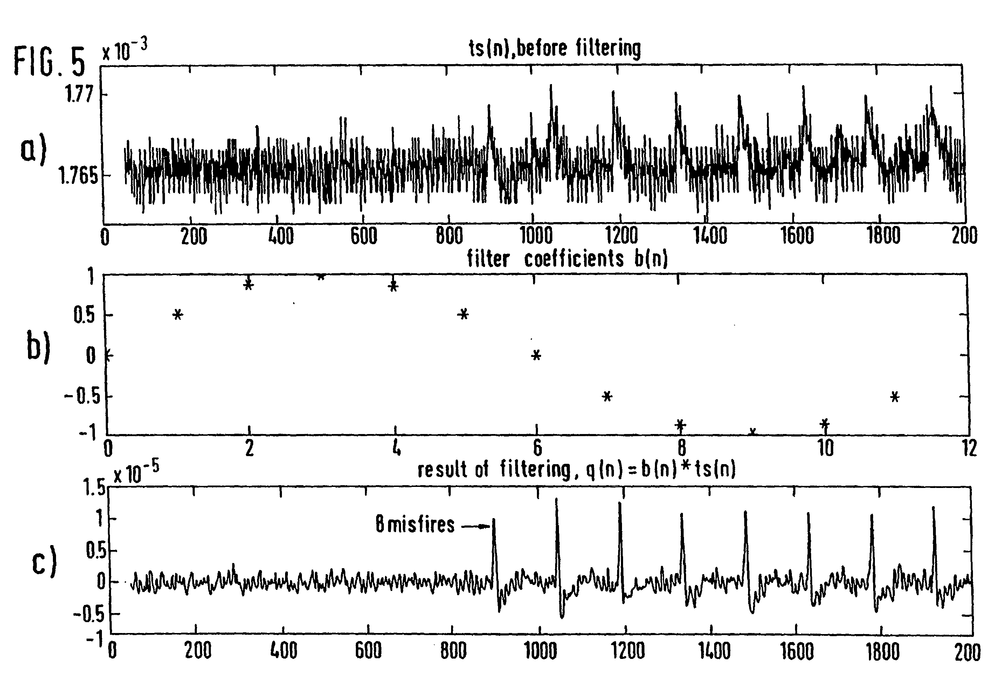

Das Ergebnis dieses digitalen Filters für den Fall einer Korrelation des aussetzertypischen Anstiegs im Segmentzeitsignal mit einer Sinusfunktion über eine komplette Nockenwellenumdrehung ist in Fig. 5 dargestellt.

Die Größe Laufunruhemerkmalsignal q ergibt sich dabei durch

$$q_1(n) = c \cdot \frac{\sum_{i=-5}^{6} \sin(2\pi i / 12) \cdot ts(n+i)}{ts(n)^3}$$

d.h.. durch Filterkoeffizienten $\underline{b}$ = (sin($2\pi m/12$),
Ma $\leq$ m $\leq$ Me, Ma = -5, Me = 6.

Dabei zeigt Fig. 5a die Abfolge der ungefilterten Segmentzeiten ts, Fig. 5b stellt die Filterkoeffizienten dar und Fig. 5c offenbart den zeitlichen Verlauf der Laufunruhemerkmalsgröße qn als Ergebnis der zeit- und wertdiskreten Verknüpfung der Segmentzeiten mit den Filterkoeffizienten. Das verbesserte Signal/Rausch-Verhältnis der q(n)-Werte im Vergleich zu den ungefilterten Segmentzeiten ist offensichtlich.

Eine weitere Möglichkeit besteht in der Korrelation des aussetzertypischen Anstiegs im Segmentzeitsignal mit einer Sprungfunktion:

$$q_2(n) = c_0 \frac{\sum_{1}^{6} ts(n+i) - \sum_{0}^{5} ts(n-i)}{ts(n)^3}$$

d.h. mit $\underline{b}$ = (1 1 1 1 1 1 -1 -1 -1 -1 -1 -1),
Ma = -5, Me = 6

Eine als Segmentzeitkrümmung bezeichnete Bildungsvorschrift ermittelt die Abweichung der Segmentzeiten von einer Geraden, die durch zwei entfernt liegende Segmentzeitpunkte gelegt wird:

$$q_3(n) = c \cdot \frac{(33/12 - 6) \cdot ts(n-5) + \sum_{i=-2}^{3} ts(n+i) - 33/12 \cdot ts(n+7)}{ts(n)^3}$$

d.h. $\underline{b}$ = (-33/12 0 0 1 1 1 1 1 1 0 0 0 (33/12-6))
Ma = -7, Me = 5

Ein weiteres Ausführungsbeispiel entsteht durch Differenzbildung zwischen 2 unterschiedlich schnellen Filterausgängen. Ein Beispiel ist die Differenz zwischen einer Filterung über 360° und 720° Kurbelwellenwinkel:

$$q_{4a}(n) = c \cdot \frac{\frac{1}{6} \sum_{-2}^{3} ts(n+i) - \frac{1}{12} \sum_{-5}^{6} ts(n+i)}{ts(n)^3}$$

d.h. $\underline{b}$ = 1/12( -1 -1 -1 1 1 1 1 1 1 -1 -1 -1)
Ma = -6, Me = 5

Bei der Differenz verschieden schneller Filter bewirkt das langsame Filter die Dynamikkompensation. Neben der bereits dargestellten Form ist auch die folgende Form möglich:

$$q_{4b}(n) = c \cdot \frac{\frac{1}{6}\sum\limits_{-5}^{0} ts(n+i) - \frac{1}{12}\sum\limits_{-11}^{0} ts(n+i)}{ts(n)^3}$$

d.h.: $\underline{b}$ = 1/12(1 1 1 1 1 1 -1 -1 -1 -1 -1 -1),
Ma = 0, Me =11

Als weitere Alternative kommt eine komplexe Exponentialfunktion in Frage. Das Ergebnis ist komplex. Die neben dem Betrag vorliegende Phaseninformation erleichtert die Zylinderidentifikation.

$$q_5(n) = c \cdot \frac{\sum\limits_{i=-5}^{6} e^{(-j2\pi i/12)} \cdot ts(n+1)}{ts(n)^3}$$

d.h.: $\underline{b}$ = exp(j2πm/12)
Ma = -6, Me = 5

Weitere Ausführungsbeispiele werten den Anstieg über vorher gemittelte Segmentzeiten aus. Die Mittelung kann über eine Kurbelwellenumdrehung erfolgen. Dann ergibt sich $q_2(n)$. Bei Mittelung über eine Nockenwellenumdrehung erhält man

$$q_6(n) = c \cdot \frac{\sum\limits_{i=1}^{12} ts(n+i) - \sum\limits_{0}^{11} ts(n-i)}{ts(n)^3}$$

d.h.: $\underline{b}$ = (1 1 1 1 1 1 1 1 1 1 1 1
-1 -1 -1 -1 -1 -1 -1 -1 -1 -1 -1 -1)

Ma = -12, Me = 11

Zusätzlich kann die Aussage dieser Merkmale durch die Höhe des Segmentzeitabfalls ergänzt werden. Dabei kann der Anstieg und der Abfall innerhalb einer Kurbelwellenumdrehung gemittelter Segmentzeiten berücksichtigt werden:

$$q_7(n) = c \cdot \frac{\sum\limits_{i=-2}^{3} ts(n+i) - \sum\limits_{-8}^{-3} ts(n+i) + \sum\limits_{i=2}^{3} ts(n+i) - \sum\limits_{4}^{9} ts(n+i)}{ts(n)^3}$$

d.h.: $\underline{b}$ = (-1 -1 -1 -1 -1 -1
2 2 2 2 2 2
-1 -1 -1 -1 -1 -1)

Ma = -9, Me = 8

Alternativ kann auch der Anstieg und Abfall innerhalb einer Nockenwellenumdrehung berücksichtigt werden:

$$q_8(n) = c \cdot \frac{\sum_{i=-5}^{6} ts(n+i) - \sum_{-17}^{-6} ts(n+i) + \sum_{i=5}^{6} ts(n+i) - \sum_{7}^{18} ts(n+i)}{ts(n)^3}$$

d.h.: $\underline{b}$ = (-1 -1 -1 -1 -1 -1 -1 -1 -1 -1 -1 -1
        2  2  2  2  2  2  2  2  2  2  2  2
   -1 -1 -1 -1 -1 -1 -1 -1 -1 -1 -1 -1)

Ma = -17, Me = 18

Eine einen größeren Kurbelwellenwinkelbereich umfassende Auswertung gelingt in einem weiteren Ausführungsbeispiel durch

$$q_9(n) = c \cdot \frac{5ts(n-5)/3 - \left\{ \sum_{i=1}^{4} ts(n+1) - ts(n-i) \right\} - 5ts(n+7)/3}{ts(n)^3}$$

d.h.: $\underline{b}$ = (-5/3 0 0 1 1 1 1 0 -1 -1 -1 -1 5/3),
Ma = -7, Me = 5.

Eine weitere Glättung ergibt sich durch

$$q_{10}(n) = \sum_{i=0}^{3} q_9(n-i)$$

Die vorstehend genannten Merkmalsignale q1, q2, q5, q6, q7 und q8 können in weiteren Ausführungsbeispielen der Erfindung um Maßnahmen zur Dynamikkompensation ergänzt werden. Deren Ziel besteht darin, den Einfluß von Drehzahländerungen zu kompensieren, die bspw. durch ein Absinken oder Ansteigen der mittleren Motordrehzahl im Fahrbetrieb bei Fahrzeugbeschleunigungen bedingt sind (Fig. 3c).

Bei den Laufunruhemerkmalsgrößen q4a und q4b bewirkt das langsame Filter die Dynamikkompensation. Die Segmentzeitkrümmung q3 enthält ebenfalls wie auch q9 und q10 bereits eine Dynamikkompensation.

Die Verfahren zur Dynamikkompensation unterliegen einer Grobeinteilung. Eine erste Methode wird auf Signale angewendet, die durch vorangehende Differenzbildung im Segmentzeitsignal oder im gefilterten Segmentzeitsignal entstehen.

Geht man von linearen Anstiegen der Segmentzeiten infolge Beschleunigungen aus, so kann mit

$$dk_1(n) = \frac{ts(n-5)-ts(n+7)}{12}$$

ein Signal zur Drehzahltrendeliminierung abgeleitet werden, welches abgewandelt in $q_9(n)$ verwendet wird.

Eine zweite Methode wird direkt auf das Segmentzeitsignal oder das gefilterte Segmentzeitsignal angewendet. Prinzipiell sind zur Dynamikkompensation alle Signale geeignet, welche durch Tiefpaßbildung aus dem Segmentzeitsignal hervorgehen. Ein Beispiel besteht in der Mittelwertbildung über 12 Segmentzeitwerte:

$$dk_2(n) = 1/12 \sum_{i=-5}^{6} ts(n+i)$$

Weiterhin besteht die Möglichkeit, zur Dynamikkompensation ein Median-Filter auf das Segmentzeitsignal anzuwenden:

$$dk_3(n) = \text{Median}_{i=Ma}^{Me}(ts(n+i))$$

Die Berechnung der Signale zur Dynamikkompensation kann durch eigene Digitalfilter erfolgen. Für die genannten Beispiele ergeben sich folgende Filterkoeffizienten:

Trendeliminierung $dk_1(n)$:
$\underline{b}$ = 1/12(1 0 0 0 0 0 0 0 0 0 0 -1),
$\overline{Ma}$ = -7, Me = 5

Tiefpaßfilterung $dk_2(n)$:
$\underline{b}$ = 1/12(1 1 1 1 1 1 1 1 1 1 1 1),
$\overline{Ma}$ = -6, Me = 5

Der Medianfilter erfordert einen nichtlinearen Algorithmus.
Die Verfahren zur Aussetzererkennung können mit denen der Dynamikkompensation in einer Filterfunktion zusammengefaßt werden.

**Patentansprüche**

**1.**   Verfahren zur Erkennung von Verbrennungsaussetzern auf der Basis des zeitlichen Verlaufs der Drehbewegung eines mit der Kurbelwelle einer Brennkraftmaschine (1) gekoppelten Geberrades (2), bei welchem Verfahren die Segmentzeiten, in denen vorbestimmte Segmente des Geberrades einen Sensor (4) passieren oder bei welchem die mittleren Drehzahlen, die den Segmenten des Geberrades (2) zugeordnet werden, erfaßt und zu einem Maß für die Laufunruhe der Brennkraftmaschine (1) verarbeitet werden, aus dessen Verhalten auf Aussetzer geschlossen wird,
wobei das Maß für die Laufunruhe durch digitale Filterung von Segmentzeiten (ts(n)) mit vorbestimmten Filterkoeffizienten (b(n)) gebildet wird,
**dadurch gekennzeichnet, dass**
die Filterung einen Winkelbereich ($\varphi_k$) bis zu vier Nockenwellenumdrehungen erfaßt
und durch einen Filter (5) mit begrenzter Impulsantwort entsprechend der folgenden Vorschrift so erfolgt, dass ein Maß q jeweils individuell für einen Zündtakt n gebildet wird, so daß jedem Zündtakt n ein Maß q(n) zugeordnet ist, mit dem ein Aussetzen der Verbrennung im Zündtakt n detektierbar ist:

$$q(n) \sim \sum_{m=Ma}^{Me} b(m-Ma) \cdot ts(n-m) = b(n) * ts(n)$$

mit b(n) als Filterkoeffizienten,
Ma, Me als Filteranfang und -ende,
M=Ma-Me+1 als Filterlänge und $*$ als Faltungsoperator
ts(n) = Segmentzeit.

**2.**   Verfahren zur Erkennung von Verbrennungsaussetzern auf der Basis des zeitlichen Verlaufs der Drehbewegung eines mit der Kurbelwelle einer Brennkraftmaschine (1) gekoppelten Geberrades (2), bei welchem Verfahren die Segmentzeiten, in denen vorbestimmte Segmente des Geberrades (2) einen Sensor (4) passieren oder bei welchem die mittleren Drehzahlen, die den Segmenten des Geberrades (2) zugeordnet wird, erfaßt und zu einem Maß für die Laufunruhe der Brennkraftmaschine (1) verarbeitet werden, aus dessen Verhalten auf Aussetzer geschlossen wird,

wobei das Maß für die Laufunruhe durch digitale Filterung von Segmentzeiten (ts(n)) mit vorbestimmten Filterkoeffizienten (b(n)) gebildet wird

**dadurch gekennzeichnet, dass**

die Filterung einen Winkelbereich ($\varphi_k$) bis zu vier Nockenwellenumdrehungen erfaßt

und durch einen Filter (5) mit begrenzter Impulsantwort entsprechend der folgenden Vorschrift so erfolgt, dass ein Maß q jeweils individuell für einen Zündtakt n gebildet wird, so daß jedem Zündtakt n ein Maß q(n) zugeordnet ist, mit dem ein Aussetzen der Verbrennung im Zündtakt n detektierbar ist:

$$q(n) \sim b(n) * \omega(n) \text{ oder } \omega(n)(b(n) * \omega(n))$$

mit

$$b(n) * \omega(n) = \sum_{m=Ma}^{Me} b(m - Ma) \cdot \omega(n - m)$$

mit b(n) als Filterkoeffizienten,
Ma, Me als Filteranfang und -ende,
M=Ma-Me+1 als Filterlänge und $*$ als Faltungsoperator
$\omega(n)$ = Segmentgeschwindigkeit.

**3.** Verfahren nach Anspruch 1, **dadurch gekennzeichnet, daß** die so berechneten Größen mit einer Dynamikkompensation kombiniert werden.

**4.** Verfahren nach Anspruch 1 oder 2, **gekennzeichnet durch** Funktionswerte einer komplexen Exponential- oder reellen Sinusfunktion als Filterkoeffizienten.

**5.** Verfahren nach Anspruch 1 oder 2, **gekennzeichnet durch** die Funktionswerte einer Sprungfunktion als Filterkoeffizienten.

**6.** Verfahren nach Anspruch 1 oder 2, **gekennzeichnet durch** Filterkoeffizienten, die ein Maß für die Abweichung der Segmentzeiten von einer Geraden sind, die **durch** zwei entfernt liegende Segmentzeitpunkte gelegt wird.

**7.** Verfahren nach Anspruch 1 oder 2, **gekennzeichnet durch** Filterkoeffizienten, die eine Differenzbildung zwischen 2 unterschiedlich schnellen Filterausgängen darstellen.

**Claims**

**1.** Method for detecting combustion misfires on the basis of the time profile of the rotary movement of a sensor wheel (2) coupled to the crankshaft of an internal combustion engine (1), in which method the segment times in which predetermined segments of the sensor wheel (2) pass a sensor (4), or in the case of which the mean speeds which are assigned to the segments of the sensor wheel (2) are detected and processed to form a measure of the rough running of the internal combustion engine (1) from the behaviour of which misfires are deduced, the measure of the rough running being formed by digital filtering of segment times (ts(n)) with the aid of predetermined filter coefficients (b(n)), **characterized in that** the filtering covers an angular range ($\varphi_k$) of up to four camshaft revolutions, and **in that** it is performed by a filter (5) with restricted pulse response in accordance with the following rule such that a measure q is formed individually in each case for an ignition cycle n such that each ignition cycle n is assigned a measure q(n) with the aid of which it is possible to detect a misfire in the ignition cycle n:

$$q(n) \sim \sum_{m=Ma}^{Me} b(m - Ma) \cdot ts(n - m) = b(n) * ts(n)$$

with b(n) as filter coefficients,
Ma, Me as start and end of filtering,
M=Ma-Me+1 as filter length and * as convolution operator, and
ts(n) = segment time

2. Method for detecting combustion misfires on the basis of the time profile of the rotary movement of a sensor wheel (2) coupled to the crankshaft of an internal combustion engine (1), in which method the segment times in which predetermined segments of the sensor wheel (2) pass a sensor (4), or in the case of which the mean speeds which are assigned to the segments of the sensor wheel (2) are detected and processed to form a measure of the rough running of the internal combustion engine (1) from the behaviour of which misfires are deduced, the measure of the rough running being formed by digital filtering of segment times (ts(n)) with the aid of predetermined filter coefficients (b(n)), **characterized in that** the filtering covers an angular range ($\varphi_k$) of up to four camshaft revolutions, and **in that** it is performed by a filter (5) with restricted pulse response in accordance with the following rule such that a measure q is formed individually in each case for an ignition cycle n such that each ignition cycle n is assigned a measure q(n) with the aid of which it is possible to detect a misfire in the ignition cycle n:

$$q(n) \sim b(n) * \omega(n) \text{ or } \omega(n) \ (b(n) * \omega(n))$$

with

$$b(n) * \omega(n) = \sum_{m=Ma}^{Me} b(m-Ma) \cdot \omega(n-m)$$

with b(n) as filter coefficients,
Ma, Me as start and end of filtering,
M=Ma-Me+1 as filter length and * as convolution operator, and
$\omega(n)$ = segment speed.

3. Method according to Claim 1, **characterized in that** the variables thus calculated are combined with dynamic compensation.

4. Method according to Claim 1 or 2, **characterized by** function values of a complex exponential or real sinusoidal function as filter coefficients.

5. Method according to Claim 1 or 2, **characterized by** the function values of a step function as filter coefficients.

6. Method according to Claim 1 or 2, **characterized by** filter coefficients which are a measure of the deviation of the segment times from a straight line which is drawn through two remotely situated segment instants.

7. Method according to Claim 1 or 2, **characterized by** filter coefficients which represent a subtraction between two filter outputs of different speeds.

**Revendications**

1. Procédé de détection des ratés de combustion sur la base de l'évolution chronologique du mouvement de rotation d'une roue phonique (2) couplée au vilebrequin d'un moteur à combustion interne (1), procédé selon lequel on associe les temps de segment pendant lesquels les segments prédéterminés de la roue phonique passent devant un capteur (4) ou pendant lesquels le nombre moyen de rotation associé au segment de la roue phonique (2) sont saisis et sont traités comme une mesure de l'irrégularité de fonctionnement du moteur à combustion interne (1), à partir de son comportement pour permettre d'évaluer des ratés, la mesure de l'irrégularité de fonctionnement étant formée par filtrage numérique de temps de segment (ts(n)) avec des coefficients de filtre prédéterminés (b(n)), **caractérisé en ce que** le filtrage saisit une plage angulaire ($\varphi$k) jusqu'à quatre rotations complètes du vilebrequin, et est effectué par un filtre (5) avec une réponse impulsionnelle limitée selon la prescription suivante, de façon à former une mesure (q) chaque fois individuelle pour une phase d'allumage (n), pour associer une mesure q(n) à chaque phase d'allumage (n) permettant de détecter un raté de combustion dans la phase d'allumage (n) :

$$q(n) \sim \sum_{m=Ma}^{Me} b(m-Ma) \cdot ts(n-m) = b(n) * ts(n)$$

dans laquelle :

b(n) =coefficients de filtre,
Ma, Me : début et fin du filtre,
M=Ma-Me+1 : longueur du filtre et $*$ est un opérateur de convolution,
ts(n) = durée du segment.

2. Procédé de détection de ratés de combustion sur la base de l'évolution chronologique du mouvement de rotation d'une roue phonique (2) couplée au vilebrequin d'un moteur à combustion interne (1), procédé selon lequel les temps de segment pendant lesquels les segments prédéterminés de la roue phonique (2) passent devant un capteur (4) ou pour lesquels les vitesses de rotation moyennes associées aux segments de la roue phonique (2) sont saisies et sont traitées pour donner une mesure de l'irrégularité de fonctionnement du moteur à combustion interne (1) à partir de laquelle on peut conclure au comportement vis-à-vis des ratés,
on forme une mesure de l'irrégularité de fonctionnement par filtrage numérique des temps de segment (ts(n)) avec des coefficients de filtre prédéterminés (b(n)),
**caractérisé en ce que**
le filtrage saisit une plage angulaire ($\varphi$k) allant jusqu'à quatre rotations de l'arbre à cames, et
par un filtre (5) à réponse impulsionnelle limitée, selon la prescription suivante, on forme une mesure (q) chaque fois individuelle pour une phase d'allumage (n) de façon à associer une mesure q(n) à chaque phase d'allumage (n), permettant de détecter un raté de combustion dans le cycle d'allumage (n) :

$$q(n) \sim b(n) * \omega(n) \text{ ou } \omega(n)(b(n) * \omega(n))$$

avec

$$b(n) * \omega(n) = \sum_{m=Ma}^{Me} b(m-Ma) \cdot \omega(n-m)$$

b(n) : coefficients de filtre
Ma, Me : début et fin du filtre
M=Ma-Me+1 : longueur du filtre et
$*$ : opérateur de convolution
$\omega$(n) = vitesse du segment.

3. Procédé selon la revendication 1,
**caractérisé en ce que**
les grandeurs ainsi calculées sont combinées à une compensation dynamique.

4. Procédé selon les revendications 1 ou 2,
**caractérisé par**
des valeurs de fonction d'une fonction exponentielle complexe ou d'une fonction sinusoïdale réelle comme coefficients de filtre.

5. Procédé selon la revendications 1 ou 2,
**caractérisé en ce que**
les valeurs fonctionnelles sont celles d'une fonction de saut comme coefficients de filtre.

6. Procédé selon la revendication 1 ou 2,
   **caractérisé par**
   des coefficients de filtre qui sont une mesure de la déviation des temps de segment par rapport à une droite passant par deux points éloignés du segment.

7. Procédé selon les revendications 1 ou 2,
   **caractérisé en ce que**
   les coefficients de filtre représentent une différence formée entre deux sorties de filtre de rapidité différentes.

# FIG. 1

# FIG. 2

FIG. 3

a)

$\varphi_k$    OTk

2

b)

ts

$\varphi_1$      $\varphi_k$      $\varphi_8$

c)

ts

$\varphi_i$

FIG. 4

FIG.5

a) ts(n),before filtering

b) filter coefficients b(n)

c) result of filtering, q(n) = b(n) * ts(n)

8 misfires →